# FASCICULE DE BREVET EUROPEEN

(11) **EP 0 603 055 B1**
(45) Date de publication et mention de la délivrance du brevet: **16.08.1995**
(21) Numéro de dépôt: 93403015.6
(22) Date de dépôt: 14.12.1993
(51) Int. Cl.: H04L 1/00, H04L 12/26

(54) **Procédé de génération d'erreurs cellule et dispositif de mise en oeuvre du procédé**
Verfahren und Schaltungsanordnung zur Erzeugung von Zellfehlern in ATM-Netzen
Method and system for generating cell errors in an ATM network

(30) Priorité: 16.12.1992 FR 9215177
(43) Date de publication de la demande: 22.06.1994
(73) Titulaire: FRANCE TELECOM, 75015 Paris (FR)
(72) Inventeur: Houdoin, Thierry, F-75116 Paris (FR); Wipliez, Christian, F-75116 Paris (FR)
(74) Mandataire: Ballot, Paul Denis Jacques

(56) Documents cités:
- FR-A- 2 660 501
- PATENT ABSTRACTS OF JAPAN vol. 13, no. 121 (E-732)24 Mars 1989 & JP-A-63 290 423
- PATENT ABSTRACTS OF JAPAN vol. 4, no. 141 (E-028)4 Octobre 1980 & JP-A-55 093 345
- PATENT ABSTRACTS OF JAPAN vol. 12, no. 200 (E-619)9 Juin 1988 & JP-A-63 001 125
- PATENT ABSTRACTS OF JAPAN vol. 4, no. 175 (E-036)3 Décembre 1980 & JP-A-55 121 757
- PATENT ABSTRACTS OF JAPAN vol. 16, no. 412 (E-1256)31 Aoüt 1992 & JP-A-04 137 843

## Description

L'invention concerne un procédé de génération d'erreurs cellules dans un signal numérique incident pour notamment simuler des erreurs dues à la transmission de ce signal sur un réseau ATM.

L'invention concerne également un dispositif de génération d'erreurs cellules.

L'invention s'applique à la fabrication de simulateurs de réseau de transmission ATM.

On rappelle à ce propos qu'un réseau ATM (Asynchronous Transfert Mode) permet la transmission d'informations numériques ayant des débits variés et pouvant être importants, ces débits pouvant en effet aller jusqu'à 155 Mbit/s.

La transmission mode ATM se fait par transfert de blocs d'informations de longueur constante. La quantité élémentaire d'informations transmises est de 48 octets; le bloc d'informations transmis en ATM est dénommé cellule et identifié par une étiquette de 5 octets appelée en-tête. La longueur totale d'une cellule est donc de 53 octets.

On rappelle aussi que deux autres grandes classes de modes de transmissions numériques existent également à l'heure actuelle. Il s'agit du mode circuit à 64k bit/s et du mode paquet utilisé par exemple par le réseau Transpac.

La demande de brevet FR-A-2 660 501 divulgue un simulateur de réseau ATM qui permet de simuler des erreurs dans un signal ATM comportant des cellules par perte ou injection de cellules.

On ne connaît pas aujourd'hui de système qui permette de réaliser une génération d'erreurs sur un signal afin de simuler une transmission sur un réseau de transmission s'approchant des caractéristiques réelles du réseau quel que soit le réseau et notamment d'un réseau ATM.

La présente invention a pour but de remédier à ce problème en proposant un procédé permettant de simuler des erreurs portant sur des cellules d'un signal transmis en mode ATM.

Les erreurs pouvant survenir à des cellules dans un réseau ATM sont de deux types:
- la perte de cellule, c'est-à-dire qu'une cellule émise par une source émettrice n'arrive pas au destinataire.
- l'insertion à tort d'une cellule, le destinataire recevant une cellule que la source n'a pas émise.

La présente invention a donc pour objet un procédé de génération d'erreurs cellules s'appliquant à la simulation d'erreurs portant sur les cellules dans une transmission sur un réseau ATM.

Le procédé permet de remplacer des cellules d'un signal incident, identifiables par leur en-tête, par des cellules erronées.

De façon plus précise, l'invention concerne un procédé de génération d'erreurs cellules dans un signal numérique incident ayant un format et ayant un débit correspondant aux normes de transmission d'un réseau ATM, principalement caractérisé en ce qu'il comporte les étapes suivantes :
- enregistrer un ou plusieurs modèles d'erreurs prédéterminés;
- charger dans des moyens de mémorisation à lecture et écriture le modèle désiré de manière à obtenir un signal numérique de génération d'erreurs par lecture de ces moyens de mémorisation,
- générer des cellules erronées;
- remplacer des cellules du signal incident par des cellules erronées en fonction du cadencement imposé par le signal de génération d'erreur.

Selon l'invention chaque modèle est prédéterminé soit à partir de lois mathématiques par exemple la loi de Poisson ou autre, soit à partir de mesures effectuées sur une transmission réelle sur ledit réseau.

Selon un autre aspect de l'invention le signal numérique de génération d'erreurs est constitué de mots correspondants à des motifs produisant le cadencement d'apparition d'erreurs et la nature de l'erreur à générer.

Le chargement dans les moyens de mémorisation consiste d'une part à changer les motifs et d'autre part à charger, en association à chaque motif, un mot de codage de la distance entre les motifs de manière à obtenir un facteur de répétition pour chaque motif, l'opération de lecture du motif consistant alors à lire successivement autant de fois le motif que l'indique le facteur mémorisé pour ce motif.

Conformément à l'invention chaque motif d'erreur comporte un bit dont la valeur représente une cellule erronée ou une cellule sans erreur et un bit dont la valeur indique une perte ou une insertion de cellule.

Selon un autre aspect de l'invention, la génération de cellules erronées consiste à mémoriser les en-têtes identifiant une cellule vide et une cellule de la communication affectée; à remplacer l'en-tête d'une cellule valide incidente par celle d'une cellule vide afin d'obtenir une perte de cellule; ou à insérer l'en-tête d'une cellule de la communication dans une cellule vide incidente afin d'obtenir une insertion de cellule.

L'invention concerne également un dispositif de génération d'erreurs cellules dans un signal numérique incident ayant un format et un débit correspondant aux normes d'un réseau de transmission ATM principalement caractérisé en ce qu'il comporte :
- des premiers moyens de mémorisation dans lesquels sont enregistrés un ou plusieurs modèles prédéterminés de génération d'erreurs,
- des deuxièmes moyens de mémorisation à lecture et écriture dans lesquels on charge au moment voulu le modèle désiré de manière à obtenir un signal numérique de génération d'erreurs par lecture de ces deuxièmes moyens de mémorisation,
- des moyens de commande aptes à commander des opérations de lecture et d'écriture dans les deuxièmes moyens de mémorisation,
- des moyens de génération d'erreurs cellules recevant le signal numérique de génération d'erreurs et générant des erreurs cellules dans le signal incident en fonction du signal numérique reçu.

Selon un autre aspect de l'invention, les moyens de génération d'erreurs cellules comportent des moyens de reconnaissance d'en-tête, des moyens de génération d'une cellule de remplacement, et des moyens de multiplexage permettant sur commande des moyens de reconnaissance d'en-tête de remplacer une cellule incidente par une cellule de remplacement.

Selon un autre aspect de l'invention les deuxièmes moyens de mémorisation comportent une mémoire ayant une première et une deuxième zone mémoire, le signal numérique de génération d'erreurs est constitué de mots correspondant à des motifs d'erreurs, ces motifs étant chargés dans la première zone mémoire, la deuxième zone mémoire comportant des mots correspondant aux nombres de fois que doit être lu successivement chaque motif; ces moyens comportant en outre un décompteur d'adresse permettant d'adresser les zones mémoires, ce décompteur étant réinitialisé par la sortie de la deuxième zone mémoire; ces moyens comportant également des moyens de gestion d'accès à la mémoire.

D'autres particularités et avantages de l'invention apparaîtront à la lecture de la description qui est faite à titre illustratif et non limitatif et en regard du dessin sur lequel:
- la figure 1 représente un schéma général d'un dispositif conforme à l'invention,
- la figure 2 représente un schéma plus détaillé de réalisation du dispositif.

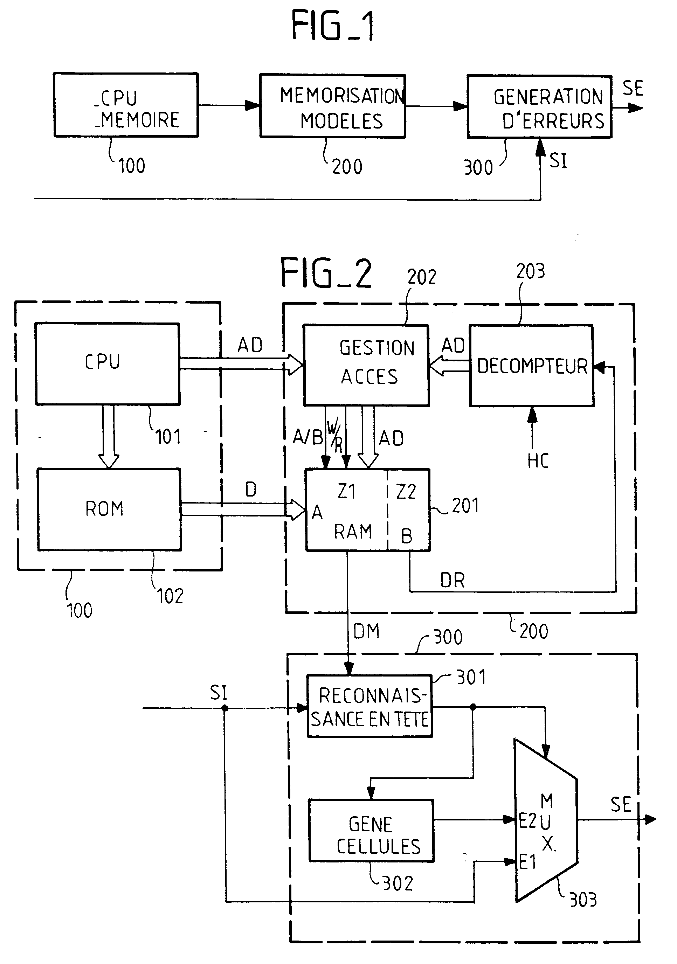

Le dispositif conforme à l'invention et représenté sur la figure 1, comporte une commande de mémorisation 100, une unité programmable de mémorisation du modèle désiré 200 et une unité programmable de génération d'erreurs cellules proprement dite 300.

Le signal incident dans lequel des erreurs cellules vont être générées est reçu par le générateur 300, et comporte des cellules affectées à une communication. Ces cellules peuvent être des cellules "vides" ou des cellules de données, la différenciation se faisant par leur en-tête.

Différents modèles d'erreurs ont été préalablement enregistrés et mémorisés dans le circuit 100. Pour générer des erreurs sur le signal incident, on choisit le modèle que l'on désire utiliser et on le charge dans l'unité de mémorisation 200.

Cette unité 200 transmet, au rythme d'arrivée des cellules du signal incident, un signal numérique indiquant au générateur 300 si une erreur cellule doit être générée ou non et la nature de l'erreur. Les erreurs générées sont de deux types: soit une perte de cellule, soit une insertion.

Lors d'une perte de cellules, la communication concernée ne reçoit pas l'information contenue dans la cellule perdue.

Lors d'une insertion à tort de cellule, la communication concernée reçoit des données qui ne lui étaient pas destinées.

Plus de détails vont être donnés dans la suite sur le procédé conforme à l'invention à partir du schéma de réalisation du dispositif conforme à l'invention, représenté sur la figure 2.

Comme cela a été dit des modèles d'erreurs cellules ont été préalablement enregistrés. Ces modèles ont été par exemple obtenus par une loi mathématique connue. On peut citer à titre d'exemple une loi telle que la loi de Poisson. Les modèles enregistrés peuvent aussi être le résultat de mesure effectuées lors de transmissions réelles sur des réseaux.

On dispose ainsi de différents modèles d'erreurs permettant de caractériser une transmission sur un réseau ATM.

Pour procéder à la génération d'erreurs cellules sur un signal incident SI de format et de débit correspondant à celui d'une transmission sur un réseau ATM, on charge le modèle d'erreurs choisi dans la mémoire d'erreur 201.

Il s'agit d'une mémoire programmable à lecture et écriture de type mémoire RAM dynamique.

Selon un mode préféré de réalisation, afin d'obtenir pour la sortie, des données au rythme de bus ATM, la mémoire choisie est une mémoire RAM vidéo à laquelle on a associé un circuit de gestion 202 classique pour gérer ses accès en lecture/écriture. On rappelle à ce propos qu'une mémoire RAM vidéo comporte un port parallèle et un port série.

Dans cette réalisation, les modèles ont été préalablement enregistrés dans une mémoire 102 à lecture de type ROM et sont chargés dans la mémoire 201 à partir du port parallèle A de cette mémoire.

Les données ainsi mémorisées dans cette mémoire sont lues au rythme du bus ATM et accessibles en sortie sur son port série B.

Le circuit 202 de gestion des accès et d'adressage de la mémoire 201 reçoit des signaux de commande d'adressage de l'unité centrale de traitement 101, au moment du chargement des modèles, par le bus de données D.

La mémoire 201 est chargée de motifs d'erreurs se présentant sous la forme des mots indiquant d'une part la cadence d'apparition des erreurs et d'autre part la nature des erreurs.

En pratique, ces mots comportent un bit dont la valeur indique qu'il faut générer une cellule avec ou sans erreur. Ce bit vaut par exemple 0 pour indiquer qu'il n'y a pas d'erreur et 1 pour indiquer qu'il y a une erreur. Ces mots comportent en outre un bit pour indiquer la nature de l'erreur c'est à dire s'il s'agit d'une insertion ou d'une perte de cellule.

Pour obtenir un taux d'erreur de l'ordre de 10⁻⁸ avec un débit en ligne de 155 Mbit/s il est nécessaire d'avoir une mémoire d'erreurs d'une capacité de 10 Mega-octets.

De manière préférée, pour éviter d'avoir à utiliser une telle capacité mémoire, une étape du procédé consiste à coder le modèle d'erreur sous la forme de motifs d'erreurs auxquels on associe un mot indiquant le nombre de fois que le motif doit être répété, ce mot étant, par conséquent, le facteur de répétition du motif.

De longues séquences sans erreur peuvent ainsi être codées avec beaucoup moins de bits.

En conséquence la mémoire d'erreurs contient des motifs correspondant à l'information "pas d'erreur" avec associé à ces motifs, un facteur de répétition du motif. La mémoire contient également des motifs correspondant à l'information "erreur" avec associé à ces motifs un facteur de répétition du motif.

Les facteurs de répétition des motifs sans erreurs ont une valeur qui est très supérieure aux facteurs de répétition des motifs avec erreur. On comprend, que le codage du facteur de répétition doit tenir compte de cette contrainte.

Selon un exemple de réalisation préféré on a choisi de coder le facteur de répétition sur 14 bits de manière à pouvoir répéter ces motifs de 1 à 16384 fois, ce qui représente un ordre de grandeur acceptable.

La mémoire d'erreur 201 permet par conséquent d'obtenir en sortie les motifs d'erreurs DM qui sont appliqués à une entrée du circuit d'erreur 300, ainsi que le facteur de répétition DR lu avec le motif d'erreur associé et qui est appliqué à l'entrée d'un décompteur 203. Pour simplifier la compréhension, on peut dire que ces motifs DM sont mémorisés dans une zone Z1 de la mémoire et que les motifs DR sont mémorisés dans une zone Z2 de cette mémoire.

Le décompteur 203 est piloté par une horloge externe Hc correspondant au rythme d'arrivée des cellules du signal incident SI.

A l'initialisation le compteur est à une valeur qui lui permet d'obtenir la première adresse de la mémoire 201 et de rester à cette adresse jusqu'à ce que la valeur chargée dans ce compteur revienne à la position initiale.

Le décompteur 203 passe à l'adresse suivante dès qu'il retrouve sa valeur initiale.

La génération d'erreur proprement dite va être détaillée dans ce qui suit.

Les modèles qui ont été établis permettent de déterminer à quel moment il faut générer une erreur dans le bus ATM incident et quelle est la nature de l'erreur (perte ou insertion d'une cellule). Le circuit d'erreur 300 permet d'agir sur les cellules incidentes du bus ATM pour y insérer des erreurs lorsque le modèle l'indique.

Pour cela, le circuit 300 comprend un circuit de reconnaissance d'en-tête 301, un circuit de génération de cellules de remplacement 302 et un multiplexeur 303.

Le circuit 301 filtre les en-têtes de cellules à affecter. Le circuit 302 génère un défaut sur les cellules filtrées par le circuit 301. Le défaut consiste à modifier l'en-tête de la cellule filtrée.

Le bus ATM transporte des cellules d'information. Dans le cas ou il n'y a pas d'information à transmettre, on utilise des cellules spéciales, appelées cellules vides, identifiées par leur en-tête.

Les circuits 301 et 302 comportent des moyens de mémorisation dans lesquels l'en-tête d'une cellule vide et l'en-tête de la communication à affecter sont mémorisés.

Pour générer des pertes de cellules, le circuit 301 filtre l'en-tête de la communication à affecter, et le circuit générateur 302 introduit l'en-tête d'une cellule vide dans cette cellule. Ainsi, une cellule valide est remplacée par une cellule vide, ce qui revient à une perte de cellule pour la communication affectée.

Pour générer une insertion de cellule, le circuit 301 filtre l'en-tête d'une cellule vide, le circuit 302 remplace cet en-tête avec celui de la communication à affecter. Dans ce cas le circuit 302 remplace une cellule vide par une cellule valide. Cependant l'information contenue dans la cellule reste celle de la cellule vide d'origine.

Le multiplexeur 303 permet de sélectionner en sortie soit une cellule incidente présente à l'entrée E1 soit une cellule générée présente à l'entrée E2.

La sortie du multiplexeur fournit le signal ATM dans lesquels des erreurs cellules ont été générées.

A titre d'exemple dans une réalisation pratique de l'invention on a utilisé une mémoire RAM vidéo pour la mémoire 201, un circuit programmable Xilinx pour réaliser les fonctions de circuits 202 et 203. On a également utilisé deux autres circuits programmables Xilinx pour réaliser les fonctions des circuits 301 et 302.

## Revendications

1. Procédé de génération d'erreurs cellules dans un signal numérique incident ayant un format et ayant un débit correspondant aux normes de transmission d'un réseau ATM, ce signal comportant des cellules affectées à une communication, ces cellules comprenant un en-tête qui permet de les identifier; caractérisé en ce qu'il comporte les étapes suivantes :
- enregistrer un ou plusieurs modèles d'erreurs prédéterminés;
- charger dans des moyens de mémorisation à lecture et écriture le modèle désiré de manière à obtenir un signal numérique de génération d'erreurs par lecture de ces moyens de mémorisation, le signal numérique de génération d'erreurs étant constitué de mots correspondant à des motifs traduisant le cadencement d'apparition d'erreurs et la nature de l'erreur à générer;
- générer des cellules erronées;
- remplacer des cellules du signal incident par des cellules erronées en fonction du cadencement imposé par le signal de génération d'erreur.

2. Procédé de génération d'erreurs cellules selon la revendication 1 , caractérisé en ce que le chargement dans les moyens de mémorisation consiste, d'une part, à changer les motifs et, d'autre part, à charger en association à chaque motif, un mot de codage de la distance entre les motifs de manière à obtenir un facteur de répétition pour chaque motif, l'opération de lecture du motif consistant alors à lire successivement autant de fois le motif que l'indique le facteur pour ce motif.

3. Procédé de génération d'erreurs cellules selon l'une quelconque des revendications précédentes, caractérisé en ce que chaque motif comporte un bit dont la valeur traduit l'apparition d'une cellule erronée ou l'apparition d'une cellule sans erreur et un bit dont la valeur traduit une perte ou une insertion de cellule.

4. Procédé de génération d'erreur cellules selon l'une quelconque des revendications précédentes, caractérisé en ce que la génération de cellules erronées consiste:
- à mémoriser les en-têtes identifiant une cellule vide et une cellule de la communication affectée;
- à insérer l'en-tête d'une cellule vide dans une cellule valide incidente afin d'obtenir une perte de cellule; ou,
- à insérer l'en-tête d'une cellule de la communication dans une cellule vide incidente afin d'obtenir une insertion de cellule.

5. Procédé de génération d'erreur selon l'une quelconque des revendications précédentes, caractérisé en ce que chaque modèle est prédéterminé, soit à partir de lois mathématiques, par exemple, la loi de Poisson ou autre, soit à partir de mesure effectuées sur une transmission réelle sur ledit réseau.

6. Dispositif de génération d'erreurs cellules dans un signal numérique incident ayant un format et un débit correspondant aux normes d'un réseau de transmission ATM, ce signal comportant des cellules affectées à une communication, ces cellules comprenant un en-tête qui permet de les identifier; caractérisé en ce qu'il comporte :
- des premiers (100) moyens de mémorisation dans lesquels sont enregistrés un ou plusieurs modèles prédéterminés de génération d'erreurs,
- des deuxièmes (200) moyens de mémorisation à lecture et écriture dans lesquels on charge au moment voulu le modèle désiré de manière à obtenir un signal numérique de génération d'erreurs par lecture de ces deuxièmes moyens de mémorisation, ces moyens (200) de mémorisation comportant une mémoire (201) ayant une première (Z1) et une deuxième (Z2) zone de mémoire, le signal numérique de génération d'erreurs étant constitué de mots correspondant à des motifs d'erreurs (DM), ces motifs étant chargés dans la première zone mémoire, la deuxième zone mémoire comportant des mots (DR), correspondant aux nombres de fois que doit être lu successivement chaque motif; ces moyens (200) comportant en outre un décompteur d'adresse (203) permettant d'adresser les zones mémoires, ce décompteur étant réinitialisé par la sortie de la deuxième zone mémoire, les moyens (200) comprenant également des moyens (202) de gestion d'accès à la mémoire;
- des moyens de commande (101, 202, 203) aptes à commander des opérations de lecture et d'écriture des deuxièmes moyens de mémorisation,
- des moyens (300) de génération d'erreurs cellules recevant le signal numérique de génération d'erreurs et générant des erreurs cellules dans le signal incident en fonction du signal numérique reçu.

7. Dispositif de génération d'erreurs cellules selon la revendication 6, caractérisé en ce que les moyens (300) de génération d'erreurs cellules comportent des moyens de reconnaissance d'en-tête (301), des moyens de génération d'une cellule de remplacement (302), et des moyens de multiplexage (303) permettant, sur commande des moyens de reconnaissance d'en-tête, de remplacer une cellule incidente par une cellule de remplacement.

8. Dispositif de génération d'erreurs cellules selon l'une quelconque des revendications 6 ou 7, caractérisé en ce que la mémoire (201) est constituée par une mémoire RAM dynamique.

9. Dispositif de génération d'erreurs selon la revendication 8, caractérisé en ce que la mémoire (201) est une mémoire RAM vidéo.

## Claims

1. Method of generating cell errors in an incident digital signal having a format and having a transmission speed corresponding to the transmission standards of an ATM network, this signal including cells allocated to a communication, these cells comprising a header which enables them to be identified; characterised in that it includes the following steps:
- recording one or more predetermined error models;
- loading the desired model into storage means for reading and writing so as to obtain a digital error generation signal by reading these storage means, the digital error generation signal consisting of words corresponding to patterns representing the rate of appearance of errors and the nature of the error to be generated;
- generating erroneous cells;
- replacing cells of the incident signal with erroneous cells in accordance with the rate imposed by the error generation signal.

2. Method of generating cell errors according to Claim 1, characterised in that the loading into the storage means consists, on the one hand, of changing the patterns and, on the other hand, of loading, in association with each pattern, a coding word for the distance between the patterns so as to obtain a repetition factor for each pattern, the pattern reading operation then consisting of successively reading the pattern as many times as indicated by the factor for this pattern.

3. Method of generating cell errors according to either one of the preceding claims, characterised in that each pattern includes a bit whose value represents the appearance of an erroneous cell or the appearance of an error-free cell and a bit whose value represents a loss or an insertion of a cell.

4. Method of generating cell errors according to any one of the preceding claims, characterised in that the generation of erroneous cells consists of:
- storing the headers identifying an empty cell and an allocated cell of the communication;
- inserting the header of an empty cell into a valid incident cell in order to obtain a cell loss; or
- inserting the header of a cell of the communication into an empty incident cell in order to obtain a cell insertion.

5. Error generation method according to any one of the preceding claims, characterised in that each model is predetermined, either using mathematical laws, for example a Poisson distribution or other law, or using measurements effected on an actual transmission over the said network.

6. Device for generating cell errors in an incident digital signal having a format and transmission rate corresponding to the standards of an ATM transmission network, this signal including cells allocated to a communication, these cells comprising a header which enables them to be identified, characterised in that it includes:
- first storage means (100) in which one or more predetermined error generation models are recorded,
- second storage means (200) for reading and writing, into which, at the desired moment, the required model is loaded so as to obtain a digital error generation signal by reading of these second storage means, these storage means (200) including a memory (201) having a first (Z1) and a second (Z2) memory area, the digital error generation signal consisting of words corresponding to error patterns (DM), these patterns being loaded into the first memory area, the second memory area including words (DR), corresponding to the number of times which each pattern must be read in succession; these means (200) also including an address counter (203) enabling the memory areas to be addressed, this counter being reinitialised by the output of the second memory area, the means (200) also comprising means (202) for managing access to the memory;
- control means (101, 202, 203) suitable for controlling the operations of reading and writing for the second storage means,
- means (300) of generating cell errors receiving the digital error generation signal and generating cell errors in the incident signal in accordance with the digital signal received.

7. Device for generating cell errors according to Claim 6, characterised in that the means (300) for generating cell errors include header recognition means (301), means of generating a replacement cell (302), and multiplexing means (303) making it possible, when instructed by the header recognition means, to replace an incident cell with a replacement cell.

8. Device for generating cell errors according to either one of Claims 6 or 7, characterised in that the memory (201) consists of a dynamic RAM.

9. Error generation device according to Claim 8, characterised in that the memory (201) is a video RAM.

## Patentansprüche

1. Verfahren zur Erzeugung von Zellfehlern in einem eintreffenden, digitalen Signal, das ein Format und eine Übertragungsgeschwindigkeit hat, die den Übertragungsnormen eines ATM-Netzes entsprechen, wobei dieses Signal einer Kommunikation zugeordnete Zellen umfaßt, diese Zellen einen Kopf umfassen, der erlaubt, sie zu identifizieren; **dadurch gekennzeichnet**, daß es die folgenden Schritte umfaßt:
- Aufzeichnen von einem oder mehreren Modellen von vorbestimmten Fehlern;
- Laden des erwünschten Modells in die Speichereinrichtungen zum Lesen und Schreiben derart, daß ein digitales Fehlererzeugungssignal durch Lesen dieser Speichereinrichtungen erhalten wird, wobei das digitale Fehlererzeugungssignal von Wörtern gebildet wird, die Mustern entsprechen, die die Abfolge des Erscheinens von Fehlern und die Art der zu erzeugenden Fehler ausdrücken;
- Erzeugen von fehlerhaften Zellen;
- Ersetzen der Zellen des eintreffenden Signals durch fehlerhafte Zelle als Funktion der Abfolge, die durch das Fehlererzeugungssignal aufgeprägt ist.

2. Verfahren zur Erzeugung von Zellfehlern gemäß dem Anspruch 1, **dadurch gekennzeichnet**, daß das Laden in die Speichereinrichtungen einerseits darin besteht, die Muster zu ändern, und andererseits in Verbindung mit jedem Muster ein Codierungswort des Abstandes zwischen den Mustern derart zu laden, daß für jedes Muster ein Wiederholungsfaktor erhalten wird, wobei der Lesevorgang des Musters dann darin besteht, nacheinander soviele Male das Muster zu lesen, wie der Faktor für dieses Muster anzeigt.

3. Verfahren zur Erzeugung von Zellfehlern gemäß irgendeinem der vorhergehenden Ansprüche, **dadurch gekennzeichnet**, daß jedes Muster ein Bit umfaßt, dessen Wert das Erscheinen einer fehlerhaften Zelle oder das Erscheinen einer Zelle ohne Fehler ausdrückt, und ein Bit, dessen Wert einen Verlust oder ein Einfügen der Zelle ausdrückt.

4. Verfahren zur Erzeugung von Zellfehlern gemäß irgendeinem der vorhergehenden Ansprüche, **dadurch gekennzeichnet**, daß die Erzeugung von fehlerhaften Zellen besteht:
- die Köpfe zu speichern, die eine leere Zelle und eine der Kommunikation zugeordnete Zelle identifizieren;
- den Kopf einer leeren Zelle in eine gültige, eintreffende Zelle einzufügen, um einen Zellenverlust zu erhalten; oder
- den Kopf einer Zelle der Kommunikation in eine eintreffende, leere Zelle einzufügen, um ein Zelleneinfügen zu erhalten.

5. Verfahren zur Fehlererzeugung gemäß irgendeinem der vorhergehenden Ansprüche, **dadurch gekennzeichnet**, daß jedes Modell vorbestimmt ist, entweder aufgrund von mathematischen Gesetzen, beispielsweise des Poisson'schen Gesetzes oder eines anderen, oder aufgrund von bei einer tatsächlichen Übertragung in dem genannten Netz durchgeführten Messungen.

6. Vorrichtung zur Erzeugung von Zellfehlern in einem eintreffenden, digitalen Signal, das ein Format und eine Übertragungsgeschwindigkeit hat, die den Normen eines ATM-Übertragungsnetzes entsprechen, wobei dieses Signal Zellen umfaßt, die einer Kommunikation zugeordnet sind, diese Zellen einen Kopf umfassen, der erlaubt, sie zu identifizieren; **dadurch gekennzeichnet**, daß sie umfaßt:
- erste (100) Speichereinrichtungen, in denen ein oder mehrere vorbestimmte Modelle zur Fehlererzeugung aufgezeichnet sind,
- zweite (200) Speichereinrichtungen zum Lesen und Schreiben, in die man zu einem gegebenen Zeitpunkt das erwünschte Modell derart lädt, daß ein digitales Fehlererzeugungssignal durch Lesen dieser zweiten Speichereinrichtungen erhalten wird, diese Speichereinrichtungen (200) einen Speicher (201) umfassen, der eine erste (Z1) und eine zweite (Z2) Speicherzone hat, das digitale Fehlererzeugungssignal von Wörtern gebildet wird, die Fehlermustern (DM) entsprechen, diese Muster in die erste Speicherzone geladen werden, die zweite Speicherzone Muster (DR) umfaßt, die der Anzahl von Malen entsprechen, die jedes Muster aufeinanderfolgend gelesen werden muß; diese Einrichtungen (200) ferner einen Adressenabzähler (203) umfassen, der erlaubt, die Speicherzonen zu addressieren, dieser Abzähler durch den Ausgang der zweiten Speicherzone erneut initialisiert wird, die Einrichtungen (200) ebenfalls Lenkeinrichtungen (202) für den Zugriff auf den Speicher umfassen;
- Steuereinrichtungen (101,202,203), die Lese- und Schreiboperationen der zweiten Speichereinrichtungen steuern können,
- Einrichtungen (300) zur Erzeugung von Zellfehlern, die das digitale Fehlererzeugungssignal erhalten und Zellfehler in dem eintreffenden Signal als Funktion des erhaltenen, digitalen Signals erzeugen.

7. Vorrichtung zur Erzeugung von Zellfehlern, gemäß Anspruch 6, **dadurch gekennzeichnet**, daß die Einrichtungen (300) zur Erzeugung von Zellfehlern umfassen, Einrichtungen zur Kopferkennung (301), Einrichtungen zur Erzeugung einer Ersetzungszelle (302) und Multiplexeinrichtungen (303), die auf Befehl der Einrichtungen zur Kopferkennung erlauben, eine eintreffende Zelle durch eine Ersetzungszelle zu ersetzen.

8. Vorrichtung zur Erzeugung von Zellfehlern, gemäß irgendeinem der Ansprüche 6 oder 7, **dadurch gekennzeichnet**, daß der Speicher (201) von einem dynamischen RAM-Speicher gebildet ist.

9. Vorrichtung zur Erzeugung von Fehlern, gemäß dem Anspruch 8, **dadurch gekennzeichnet**, daß der Speicher (201) ein RAM-Videospeicher ist.
